# EUROPEAN PATENT APPLICATION

(11) **EP 1 833 252 A1**
(43) Date of publication of application: **12.09.2007**
(21) Application number: 05820093.2
(22) Date of filing: 20.12.2005
(51) Int. Cl.: H04N 7/173, H04B 1/16, H04M 1/00

(54) **MOBILE TYPE DIGITAL BROADCAST RECEIVING APPARATUS AND RECEIVING METHOD**

(30) Priority: 28.12.2004 JP 2004380605
(71) Applicant: MATSUSHITA ELECTRIC INDUSTRIAL CO., LTD., Osaka 571-8501 (JP)
(72) Inventor: KAMADA, Takashi c/o Matsushita El. Ind. Co., Ltd., Chuo-ku, Osaka-shi, Osaka 540-6319 (JP); ARAKAWA, Hiroshi c/o Matsushita El. Ind. Co., Ltd., Chuo-ku, Osaka-shi, Osaka 540-6319 (JP)
(74) Representative: Gassner, Wolfgang
(86) International application number: PCT/JP2005/023393
(87) International publication number: WO 2006/070647

(57) **Abstract**

The present invention separates a video stream from compressed multiplexed data using a transport decoding section (3) while receiving digital broadcast using an antenna (1), expands the video stream, and reproduces original video data and original audio data. At this time, when a mobile digital television (100) is open, the original video data is outputted to a main screen video output section (9). On the other hand, when the mobile digital television (100) is closed, the video stream is stored in a temporary storage section (11) and only an I picture is extracted from the video stream, decoded, and outputted to a sub-screen video output section (10).

## Description

### TECHNICAL FIELD

The present invention relates to a mobile digital broadcast receiving apparatus and a digital broadcast receiving method. More particularly, the present invention relates to a mobile broadcast receiving apparatus having at least two screens and a digital broadcast receiving method.

### BACKGROUND ART

Currently, a digital broadcast service using MPEG technology has started. As a digital broadcast receiving apparatus used for such a service, a stationary digital broadcast receiving apparatus has been already put into practical use. On the other hand, development of standards for a mobile digital broadcast receiving apparatus has been in progress and the mobile digital broadcast receiving apparatus is also being put into practical use.

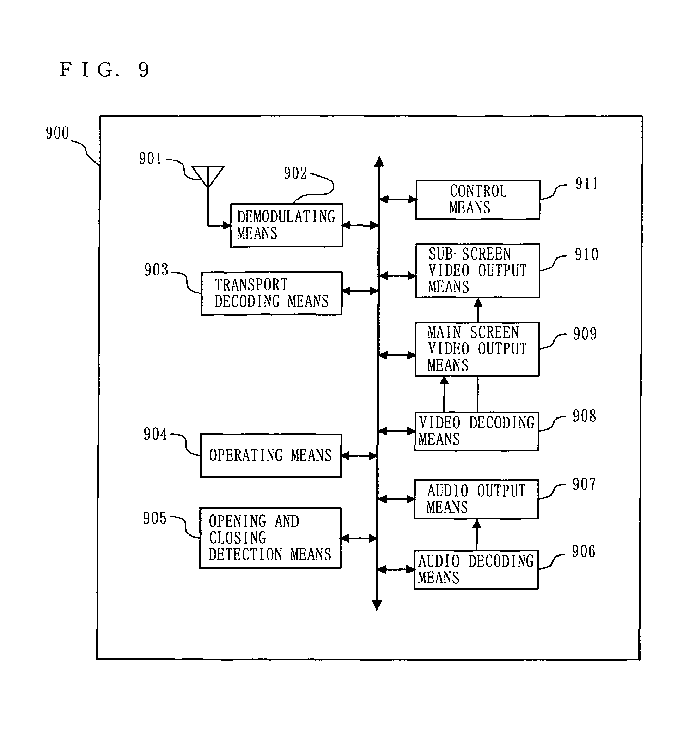

FIG. 9 is a diagram illustrating a configuration of a mobile digital broadcast receiving apparatus which is assumed based on a configuration of a conventional stationary digital broadcast receiving apparatus. The mobile digital broadcast receiving apparatus 900 shown in FIG. 9 comprises an antenna 901, demodulation means 902, transport decoding means 903, operating means 904, opening and closing detection means 905, audio decoding means 906, audio output means 907, video decoding means 908, main screen video output means 909, sub-screen video output means 910, and control means 911. In FIG. 9, the antenna 901 receives digital airwaves transmitted from a broadcast station. The demodulation means 902 demodulates the received airwaves in synchronization with airwaves of a channel specified by a user and obtains a transport stream which is compressed multiplexed data of audio and video. The transport decoding means 903 separates, from the transport stream obtained by the demodulation means 902, an audio stream which is audio compressed data and a video stream which is video compressed data. The operating means 904 is an interface with which a user provides instructions to the mobile digital broadcast receiving apparatus. Instructions provided by a user are, for example, to turn power on/off, to specify a channel to be received, etc. In a case where the mobile digital broadcast receiving apparatus includes the main screen video output means 909 and is foldable, the opening and closing detection means 905 detects an opening and closing state of the main screen video output means 909. For example, a microswitch or the like for detecting whether a housing is folded is one example of the opening and closing detection means 905. The audio decoding means 906 decodes the audio stream and obtains original audio data. The video decoding means 908 decodes the video stream and obtains original video data. The audio output means 907 outputs the original audio data. A loudspeaker and output jacks of headphones are examples of the audio output means 907. The main screen video output means 909, which is attached on the apparatus so as to be enclosed in the apparatus when the apparatus is folded, outputs the decoded original video data. A liquid crystal display or the like, which has a size equal to or greater than two inches and can output QVGA-sized video, is one example of the main screen video output means 909. The sub-screen video output means 910 has a smaller screen size than that of the main screen video output means and is attached on a back face of the main screen video output means. A liquid crystal display or the like, which has a size of approximately one inch and whose resolution is lower than that of the main screen, is one example of the sub-screen video output means 910. The control means 911 controls various processes of the mobile digital broadcast receiving apparatus 900.

In the above-mentioned configuration, when the mobile digital broadcast receiving apparatus 900 is open, a digital broadcast is displayed on the main screen video output means 909. On the other hand, when the mobile digital broadcast receiving apparatus 900 is folded, the opening and closing detection means 905 detects that the mobile digital broadcast receiving apparatus 900 has been folded. The control means 911 stops operations of the demodulation means 902, the transport stream decoding means 903, the video decoding means 908, and the main screen video output means 909. In other words, demultiplexing of a transport stream, decoding of a video stream, and outputting of video to the main screen video output means 909 are stopped. Thus, a reduction in power consumption in the mobile digital broadcast receiving apparatus 900 is devised. At this time, information on control of the mobile digital broadcast receiving apparatus 900 is displayed on the sub-screen video output means 910. Even in a case where the mobile digital broadcast receiving apparatus 900 is not flip-type, an on/off switch of a liquid crystal display of the main screen is provided as the operating means 904, and when the liquid crystal display of the main screen is off, the same processes as mentioned above are performed.
Patent document 1: Japanese Laid-Open Patent Publication No. 2003-87369

### DISCLOSURE OF THE INVENTION

### PROBLEMS TO BE SOLVED BY THE INVENTION

However, the above-described mobile digital broadcast receiving apparatus disclosed in patent document 1 has a problem that since all processes associated with outputting video are stopped when the main screen is closed, video cannot be watched at all.

Therefore, an object of the present invention is to provide a mobile digital broadcast receiving apparatus and a digital broadcast receiving method which allow video to be displayed even when a main screen is closed.

### SOLUTION TO THE PROBLEMS

To achieve the above objects, the present invention has the following aspects.

A first aspect of the present invention is directed to a mobile digital broadcast receiving apparatus comprising: a demodulating section for receiving digital broadcast and demodulating the digital broadcast to compressed multiplexed data of audio and video; a transport decoding section for separating compressed audio data and compressed video data from the compressed multiplexed data; a decoding section for decoding the compressed video data to original video data; a first screen and a second screen for outputting the original video data; and a switching section for switching an outputting mode between a first outputting mode in which the original video data is outputted onto the first screen and a second outputting mode in which the original video data is outputted onto the second screen, wherein the decoding section decodes all of the compressed video data in the first outputting mode and only a part of the compressed video data in the second outputting mode.

In a second aspect of the present invention based on the first aspect, the mobile digital broadcast receiving apparatus has a main body which is structured so as to be foldable, further comprises an opening and closing detection section for detecting whether or not the main body is folded, and is characterized in that the first screen is provided being positioned so as to be enclosed in the main body when the main body is folded, the second screen is provided being positioned so as not to be enclosed in the main body even when the main body is folded, and the switching section switches the outputting mode to the second outputting mode when the opening and closing detection section detects that the main body is folded and to the first outputtingmode when the opening and closing detection section detects that the main body is not folded.

In a third aspect of the present invention based on the first aspect, the mobile digital broadcast receiving apparatus is characterized in that in the second outputtingmode, the decoding section decodes only a frame, extracted at intervals, among a plurality of successive frames of video data contained in the compressed video data.

In a fourth aspect of the present invention based on the first aspect, the mobile digital broadcast receiving apparatus is characterized in that the compressed video data is data compressed in an MPEG format, and in the second outputting mode, the decoding section decodes only an I picture in the video data compressed in the MPEG format.

In a fifth aspect of the present invention based on the first aspect, the mobile digital broadcast receiving apparatus further comprises: a first storage section for temporarily storing compressed video data to be decoded by the decoding section in the first outputting mode; a second storage section, having a smaller storage capacity than a storage capacity of the first storage section, for temporarily storing compressed video data to be decoded by the decoding section in the second outputting mode; and a video stream analysis section for sequentially storing, in the first storage section, all of the compressed video data in the first outputting mode and in the second storage section, only a part of the compressed video data in the second outputting mode, and is characterized in that in the second outputting mode, supplying power to the first storage section is stopped.

In a sixth aspect of the present invention based on the first aspect, the mobile digital broadcast receiving apparatus is characterized in that immediately after the switching section has switched the outputting mode from the second outputting mode to the first outputting mode, the decoding section reproduces the original video data to be outputted onto the first screen by using the compressed video data stored in the second storage section.

In a seventh aspect of the present invention based on the first aspect, the mobile digital broadcast receiving apparatus is characterized in that an operating frequency of the decoding section in the second outputting mode is lower than in the first outputting mode.

In a eighth aspect of the present invention based on the first aspect, the mobile digital broadcast receiving apparatus is characterized in that the compressed data is data compressed in an MPEG format, that the mobile digital broadcast receiving apparatus further comprises an I picture interval detection section for detecting a minimum interval value among intervals of generation of an I picture contained in the compressed video data, and that the operating frequency of the decoding section in the second outputting mode changes in accordance with a result of detection performed by the I picture interval detection section.

A ninth aspect of the present invention is directed to a digital broadcast receiving method for receiving digital broadcast by using a mobile digital broadcast receiving apparatus having a first screen and a second screen, comprising: a demodulating step of receiving digital broadcast and demodulating the digital broadcast to compressed multiplexed data of audio and video; a transport decoding step of separating compressed audio data and compressed video data from the compressed multiplexed data; a decoding step of decoding the compressed video data to original video data; a first screen outputting step of outputting the original video data onto the first screen; a second screen outputting step of outputting the original video data onto the second screen; and a switching step of switching an outputting mode between a first outputting mode in which the original video data is outputted onto the first screen and a second outputting mode in which the original video data is outputted onto the second screen, wherein the decoding step decodes all of the compressed video data in the first outputting mode and only a part of the compressed video data in the second outputting mode.

In a tenth aspect of the present invention based on the ninth aspect, the digital broadcast receiving method is characterized in that the mobile digital broadcast receiving apparatus has the main body which is structured so as to be foldable, and has the first screen provided being positioned so as to be enclosed in the main body when the main body is folded and the second screen provided being positioned so as not to be enclosed in the main body even when the main body is folded, the digital broadcast receiving method further comprising an opening and closing detection step of detecting whether or not the main body is folded, and is characterized in that the switching step switches the outputting mode to the second outputting mode when the opening and closing detection step detects that the main body is folded and to the first outputting mode when the opening and closing detection step detects that the main body is not folded.

In an eleventh aspect of the present invention based on the ninth aspect, the digital broadcast receiving method is characterized in that in the second outputting mode, the decoding step decodes only a frame, extracted at intervals, among the plurality of successive frames of video data contained in the compressed video data.

In a twelfth aspect of the present invention based on the ninth aspect, the digital broadcast receiving method is characterized in that the compressed video data is data compressed in an MPEG format, and in the second outputting mode, the decoding section decodes only an I picture in the video data compressed in the MPEG format.

In a thirteenth aspect of the present invention based on the ninth aspect, the digital broadcast receiving method is characterized in that the mobile digital broadcast receiving apparatus further comprises: a first storage section for temporarily storing compressed video data to be decoded by the decoding step in the first outputting mode; and a second storage section, having a smaller storage capacity than a storage capacity of the first storage section, for temporarily storing compressed video data to be decoded by the decoding step in the second outputting mode, the digital broadcast receiving method comprising a video stream analysis step of sequentially storing, in the first storage section, all of the compressed video data in the first outputting mode and in the second storage section, only a part of the compressed video data in the second outputting mode, and the digital broadcast receiving method is characterized in that in the second outputting mode, supplying power to the first storage section is stopped.

In a fourteenth aspect of the present invention based on the ninth aspect, the digital broadcast receiving method is characterized in that immediately after the switching step has switched the outputting mode from the second outputting mode to the first outputting mode, the decoding step reproduces the original video data to be outputted onto the first screen by using the compressed video data stored in the second storage section.

In a fifteenth aspect of the present invention based on the ninth aspect, the digital broadcast receiving method is characterized in that a processing speed of the decoding step in the second outputting mode is lower than in the first outputting mode.

In a sixteenth aspect of the present invention based on the ninth aspect, the digital broadcast receiving method is characterized in that the compressed data is data compressed in an MPEG format, the digital broadcast receiving method further comprising an I picture interval detection step, performed in the mobile digital broadcast receiving apparatus, of detecting a minimum interval value among intervals of generation of an I picture contained in the compressed video data, and in that the processing speed of the decoding step in the second outputting mode changes in accordance with a result of detection performed at the I picture interval detection step.

### EFFECT OF THE INVENTION

According to the above-mentioned first to fourth aspects, outputting to the first screen in the second outputting mode can be discontinued, thereby allowing a reduction in power consumption required for outputting to the first screen. In the second outputting mode, video is displayed on the second screen, thereby allowing a user to continue watching the video even in the second outputting mode. Furthermore, in the second outputting mode, only a part of video data is decoded and displayed on the second screen, thereby allowing a reduction in power consumption required for decoding processing in the second outputting mode.

According to the above-mentioned fifth aspect, by appropriately using the temporary storage sections, whose storage capacities are different from each other, in the first outputting mode and the second outputting mode, power consumption can be reduced.

According to the above-mentioned sixth aspect, immediately after the outputting mode has been switched from the second outputting mode to the first outputting mode, video is displayed on the first screen based on compressed video data accumulated to be outputted to the second screen. Thus, even immediately after the outputting mode in the mobile digital broadcast receiving apparatus has been switched from the second outputting mode to the first outputting mode, the video is instantaneously displayed on the first screen.

According to the above-mentioned seventh to eighth aspects, by changing a speed of the decoding processing, power consumption can be reduced.

According to a digital broadcast receiving method of the present invention, the same effect as that obtained by the above-mentioned digital broadcast receiving apparatus of the present invention can be obtained.

### BRIEF DESCRIPTION OF THE DRAWINGS

[FIG. 1] FIG. 1 is a block diagram illustrating a mobile digital broadcast receiving apparatus according to a first embodiment of the present invention.
[FIG. 2] FIG. 2 is a schematic diagram illustrating an external plane view of the mobile digital television.
[FIG. 3] FIG. 3 is a schematic diagram illustrating an external oblique perspective view of the mobile digital television.
[FIG. 4] FIG. 4 is a flowchart showing first broadcast receiving processing.
[FIG. 5] FIG. 5 is a schematic diagram illustrating one example of a configuration of a video stream.
[FIG. 6] FIG. 6 is a block diagram illustrating a mobile digital broadcast receiving apparatus according to a second embodiment of the present invention.
[FIG. 7] FIG. 7 is a flowchart showing second broadcast receiving processing.
[FIG. 8] FIG. 8 a flowchart showing third broadcast receiving processing.
[FIG. 9] FIG. 9 is a block diagram illustrating a conventional mobile digital broadcast receiving apparatus.

### DESCRIPTION OF THE REFERENCE CHARACTERS

- 1: antenna
- 2: demodulating section
- 3: transport decoding section
- 4: operating section
- 5: opening and closing detection section
- 6: audio decoding section
- 7: audio output section
- 8: video decoding section
- 9: main screen video output section
- 10: sub-screen video output section
- 11: temporary storage section
- 12: video stream analysis section
- 13: control section
- 61: first temporary storage section
- 62: second temporary storage section
- 100, 200: mobile digital broadcast receiving apparatus

### BEST MODE FOR CARRYING OUT THE INVENTION

### (First Embodiment)

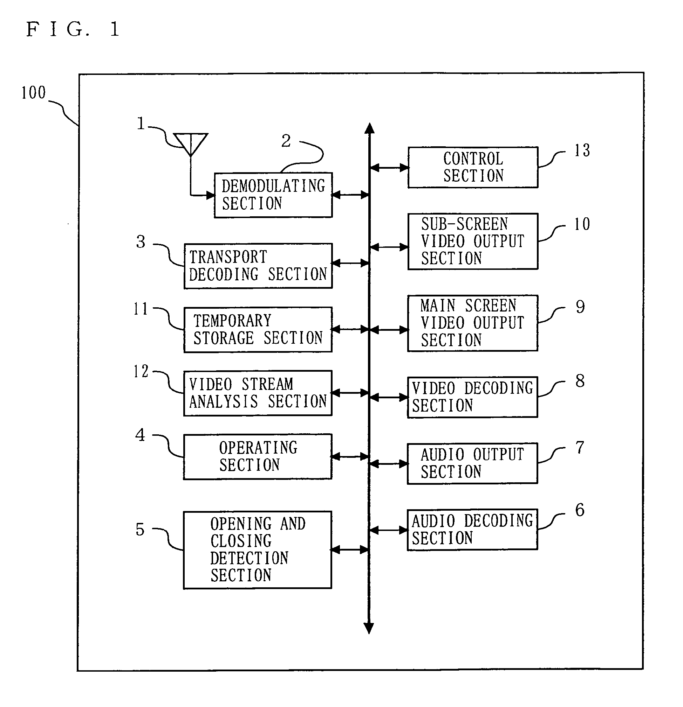

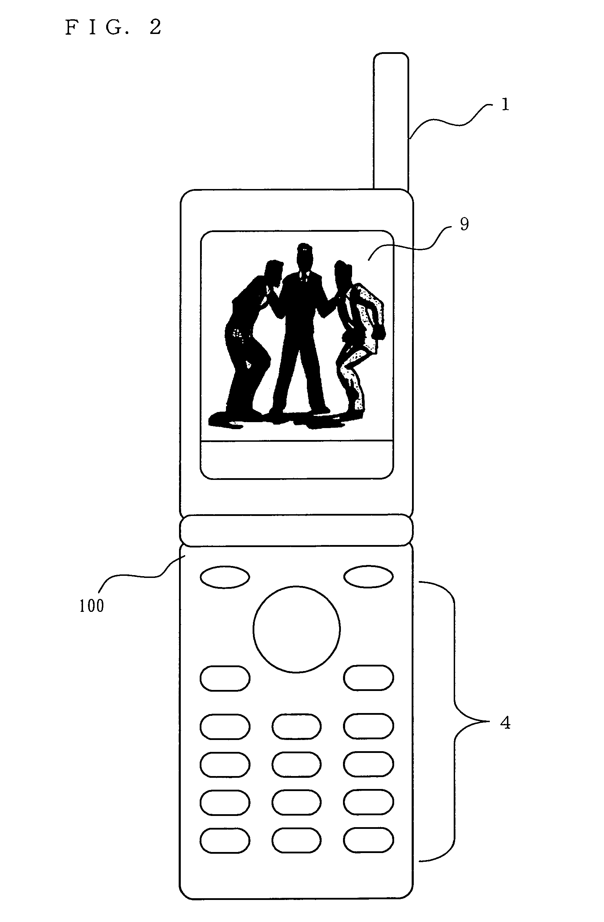

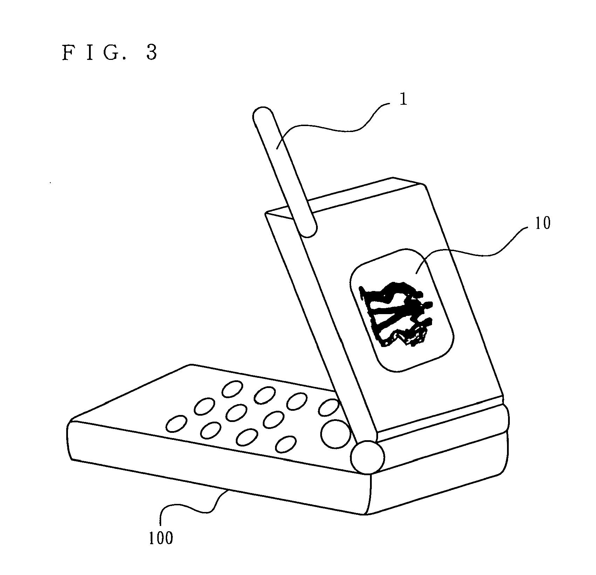

FIG. 1 is a block diagram illustrating a configuration of a mobile digital broadcast receiving apparatus (hereinafter, referred to as a mobile digital television) according to a first embodiment of the present invention. FIG. 2 is a schematic diagram illustrating an external plane view of the mobile digital television. FIG. 3 is a schematic diagram illustrating an external oblique perspective view of the mobile digital television.

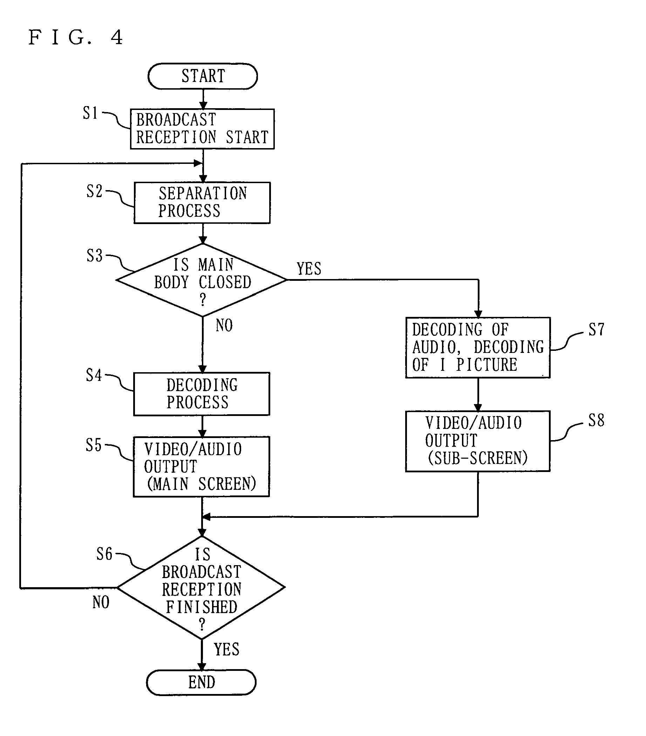

In FIG. 1, the mobile digital television 100 comprises an antenna 1, a demodulating section 2, a transport decoding section 3, an operating section 4, an opening and closing detection section 5, an audio decoding section 6, an audio output section 7, a video decoding section 8, a main screen video output section 9, a sub-screen video output section 10, a temporary storage section 11, a video stream analysis section 12, and a control section 13. The antenna 1 receives digital airwaves transmitted from a broadcasting station and outputs the airwaves to the demodulating section 2. The demodulating section 2 demodulates the received airwaves to a transport stream which is compressed multiplexed data of audio and video. The demodulating section 2 outputs the transport stream to the transport decoding section 3. The transport decoding section 3 separates compressed audio data (hereinafter, referred to as an audio stream) and compressed video data (hereinafter, referred to as a video stream) from the transport stream demodulated by the demodulating section 2. In the present embodiment, it is supposed that MPEG2 is used as compression technology of audio and video. The operating section 4 is an interface with which a user gives, to the mobile digital television 100, instructions such as turning power on/off and specifying a channel to be received. The opening and closing detection section 5 detects an opening and closing state of the mobile digital television 100. For example, a microswitch or the like, which is disposed in vicinity to a portion around which a housing is folded is one example of the opening and closing detection section 5. Note that when a user gives a predetermined instruction using the operating section 4, it may be judged in a forced manner that the opening or closing state is detected (for example, in a case where the mobile digital television 100 is not open and closed-type). The audio decoding section 6 decodes the audio stream to original audio data (decoding) to be outputted to the audio output section 7. The audio output section 7 outputs the above-mentioned original audio data. A loudspeaker, output jacks of headphones, and the like are examples of the audio output section 7. The video decoding section 8 decodes the video stream to original video data. The video decoding section 8 outputs the original video data to the main screen video output section 9 or the sub-screen video output section 10. The main screen video output section 9 is attached so as to be enclosed in the mobile digital television 100 when the mobile digital television 100 is folded (see FIG. 2 and FIG. 3) and outputs the above-mentioned original video data. A liquid crystal display or the like, which has a size equal to or greater than two inches and can output QVGA-sized video, is one example of the main screen video output section 9. The sub-screen video output section 10 is attached on a back face of the main screen video output section 9 (see FIG. 3). The sub-screen video output section 10 has a smaller screen size than that of the main screen video output means 9 and a liquid crystal display or the like, which has a size of approximately one inch and whose resolution is lower than that of the main screen video output section 9, is one example of the sub-screen video output means 10. The temporary storage section 11 temporarily stores the video stream separated by the transport decoding section 3. The video stream analysis section 12 analyzes a compression structure of the above-mentioned video stream and extracts data, such as an I picture (intra-coded image), which structures the original video. The control section 13 controls the mobile digital television 100 for performing operations described below in a flowchart shown in FIG. 4.

The present invention, having the above-mentioned configuration, separates the video stream from the transport stream using the transport decoding section 3 while receiving digital broadcast using the antenna 1, expands the video stream, and reproduces the original video data and the original audio data. At this time, when the mobile digital television 100 is open, the original video data is outputted to the main screen video output section 9. On the other hand, when the mobile digital television 100 is closed, the video stream is stored in the temporary storage section 11 and only an I picture is extracted from the video stream, decoded, and outputted to the sub-screen video output section 10.

Hereinunder, with reference to FIGs. 4 to 5, operations of broadcast receiving processes which the mobile digital television 100 performs will be described in detail. FIG. 4 is a flowchart showing the broadcast receiving processes which the mobile digital television 100 performs.

First, the mobile digital television 100 starts receiving digital terrestrial broadcasting (step S1). The process at step S1 will be more specifically described. The antenna 1 for a UHF band receives airwaves transmitted from a digital terrestrial broad casting station. Next, the demodulating section 2 receives airwaves of a broadcasting station specified by a user by tuning, via the operating section 4, with a frequency of the broadcasting station specified by the user. And the demodulating section 2 demodulates the received airwaves to a transport stream. As described above, the reception start process at step S1 ends.

Since the transport stream demodulated at the above-mentioned step S1 is multiplexed data of audio/video or the like, the transport decoding section 3 next separates the transport stream into a video stream and an audio stream. The control section 13 outputs only the audio stream to the audio decoding section 6 (step S2).

After finishing the separation process at step S2, the opening and closing detection section 5 determines whether or not a main body of the mobile digital television 100 is folded (step S3). When a result of the determination at step S3 is that the main body of the mobile digital television 100 is not folded (i.e. , open) (NO at step S3), the control section 13 stores in the temporary storage section 11 the video stream separated at the above-mentioned step S2. Further, the control section 13 outputs the video stream to the video decoding section 8.

Next, the video decoding section 8 decodes the video stream to the original video data. The audio decoding section 6 decodes the audio stream to the original audio data. The control section 13, using time management information for synchronous reproduction (PTS: Presentation Time Stamp or DTS: Decoding Time Stamp), synchronizes the original video data and the original audio data and outputs the original video data and the original audio data to the main screen video output section 9 and the audio output section 7, respectively (step S4). Next, the main screen video output section 9 displays the above-mentioned original video data on the main screen. Concurrently, the audio output section 7 outputs the original audio data to, for example, headphones or the like (step S5). Thereafter, the control section 13 proceeds to the below-described process at which it is determined whether the broadcast reception process ends (step S6).

Next, a process in a case where a result of the determination at step S3 is that the main body of the mobile digital television 100 is folded will be described. When the result of the determination at step S3 is that the main body of the mobile digital television 100 is folded (YES at step S3), the control section 13 stores the video stream separated at the above-mentioned step S2 in the temporary storage section 11. At this time, since a storage capacity of the temporary storage section 11 is limited, the oldest video stream, among the stored video streams, may be erased and in a resultant space area, a new video stream may be stored.

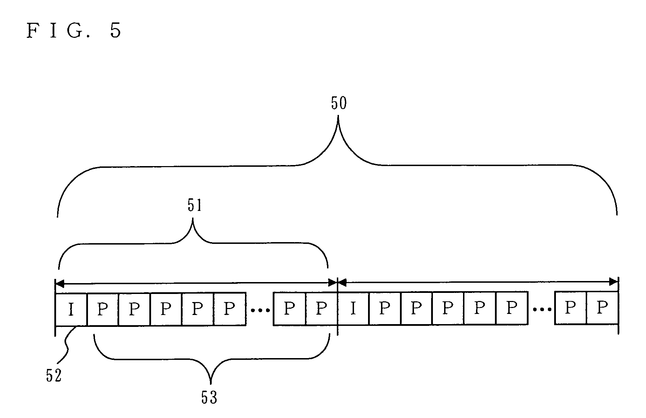

Next, the video stream analysis section 12 analyzes the video stream stored in the temporary storage section 11 and outputs only an I picture to the video decoding section 8 (step S7). This process at step S7 will be more specifically described with reference to FIG. 5. FIG. 5 is a schematic diagram illustrating one example of a configuration of the video stream stored in the temporary storage section 11. In FIG. 5, a video stream 50 includes a plurality of GOPs 51 (Group of Pictures). The GOP 51 includes one I picture 52 and a plurality of P pictures (Predictive coded images). Here, one GOP 51 contains data (60 frames) read out for two seconds, which is processed as a group. In the video stream 50 shown in FIG. 5, the video stream analysis section 12 sequentially reads each one of the pictures. Thereafter, the video stream analysis section 12 identifies PCT (Picture Coding Type), which is a kind of data contained in each picture and determines a picture type, i.e., an I picture or a P picture. The video stream analysis section 12 outputs only an I picture 52 to the video decoding section 8. The video decoding section 8 decodes the above-mentioned I picture 52 to original video data. The video decoding section 8 outputs the original video data to the sub-screen video output section 10. Concurrently, the audio decoding section 6 decodes the above-mentioned audio stream to original audio data to be outputted to the audio output section 7. As described above, the process at step S7 ends.

Next, the sub-screen video output section 10 displays the original video data outputted at step S7 on the sub-screen. Concurrently, the audio output section 7 outputs the original audio data to the headphones or the like (step S8). Here, in accordance with the specification of MPEG, each of I pictures is allocated at regular intervals. Therefore, in a case, for example, where an I picture is allocated at intervals of two seconds, video displayed on the sub-screen is not continuous and is, as it were, an image displayed per two seconds in a picture-card show manner. After finishing the process at step S7, the control section 13 proceeds to the process at which whether the broadcast reception process ends is determined (step S6).

After finishing the process at step S5 or the process at S7, the control section 13 determines presence or absence of an instruction of ending the broadcast reception (step S6). When there is no instruction of ending the broadcast reception (NO step S6), the control section 13 returns to the above-mentioned step S2 and repeats the processes. On the other hand, for example, when a user gives an instruction of turning off (ending the broadcast reception) power of the apparatus (YES at step S6), the control section 13 stops operations of the demodulating section 2, the transport decoding section 3, the video decoding section 8, the main screen video output section 9, the sub-screen video output section 10, the audio decoding section 6, and the audio output section 7. Thus, the first broadcast reception processing ends.

In the first embodiment, the mobile digital television 100 is closed and even when outputting to the main screen video output section 9 is stopped, a user can, through outputting video to the sub-screen video output section 10, confirm a state of video of a channel which the user sets, without opening the main body of the mobile digital television 100. In addition, because in the above-mentioned decoding process (step S7), only an I picture is decoded, power consumption required for the decoding process can be suppressed as compared with that required for a general decoding process in which P pictures are decoded. Further, because video is outputted to the sub-screen which has a smaller size than that of the main screen, power consumption required for outputting video can be suppressed as compared with a care where video is outputted to the main screen.

### (Second Embodiment)

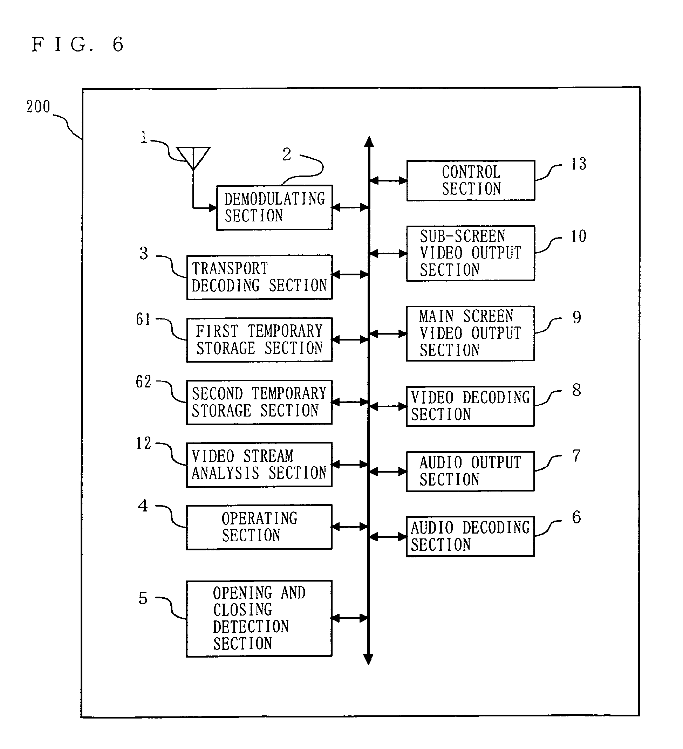

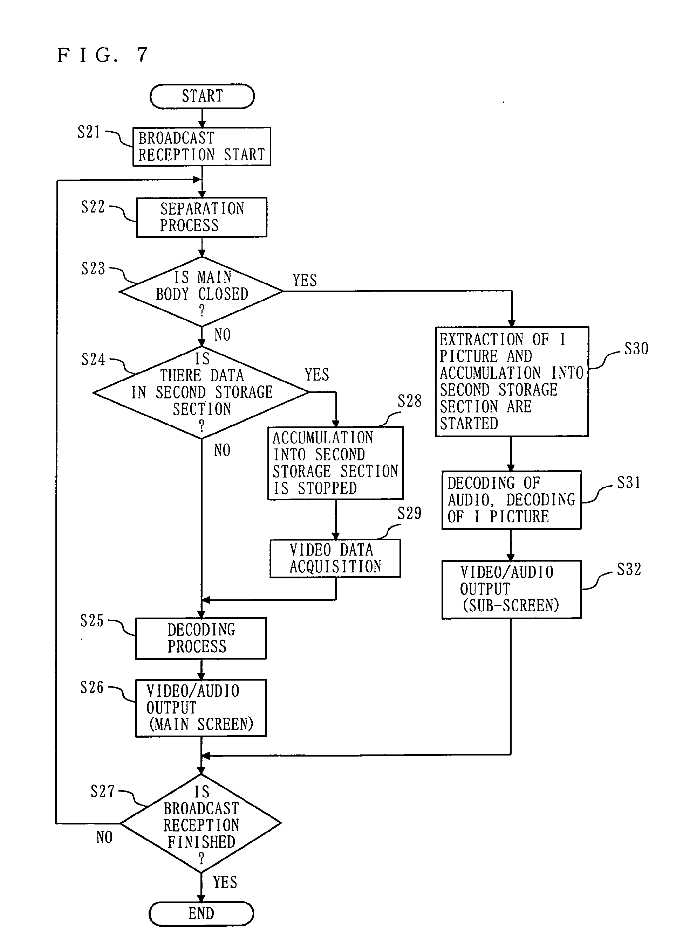

With reference to FIG. 6 and FIG. 7, a mobile digital television according to a second embodiment of the present invention will be described. In the first embodiment, the temporary storage section 11 used for the decoding process is common in either case where video is outputted to the main screen or where video is outputted to the sub-screen. On the other hand, in the second embodiment, a temporary storage section to be used for a process in which video is outputted to a main screen is different from that used for a process in which video is outputted to a sub-screen.

FIG. 6 is a block diagram illustrating a configuration of the mobile digital television according to the second embodiment of the present invention. In FIG. 6, in the mobile digital television 200, the temporary storage section 11 described in the first embodiment with reference to FIG. 1 is replaced with a first temporary storage section 61 and a second temporary storage section 62 is further added. Other components are the same as those in the first embodiment. Accordingly, the same numerical characters are used for the same components and detailed descriptions will be omitted. The first temporary storage section 61 shown in FIG. 6 temporarily stores a video stream separated by the transport decoding section 3. On the other hand, the second temporary storage section 62 temporarily stores only an I picture outputted from the video stream analysis section 12. Note that in order to decode P pictures contained in compressed video data in an MPEG format, not only data of P pictures but also data of an I picture received prior to receiving the P pictures are required. In contrast, when only each of the I pictures is sequentially decoded, since only data of an I picture to be decoded is required, a storage capacity for the decoding process may be small as compared with a case where all pictures are sequentially decoded. Therefore, it is only required to separately provide the second temporary storage section 62 having a smaller storage capacity than that of the first temporary storage section 61.

Hereinafter, with reference to FIG. 7, operations in broadcast reception processes performed by the mobile digital television 200 will be described in detail. FIG. 7 is a flowchart showing the broadcast reception processing performed by the mobile digital television 200. In FIG. 7, since processes at step S21 to step S23 and processes at S25 to S27 are the same as those at step S1 to step S6 in the first embodiment described above with reference to FIG. 4, detailed descriptions will be omitted here.

When a result of determining whether or not a main body of the mobile digital television 200 is closed (step S23) is that the main body of the mobile digital television 200 is folded (YES step S23), the control section 13 outputs a video stream separated at step S22 to the video stream analysis section 12. Concurrently, the control section 13 stops supplying power to the first temporary storage section 61. Thereafter, the video stream analysis section 12 identifies, from the above-mentioned video stream, an I picture to be outputted to the second temporary storage section 62 by performing the same process as that at step S7 performed in the above-described first embodiment (step S30).

Next, the video decoding section 8 decodes the I picture, stored in the second temporary storage section 62, to original video data. The video decoding section 8 outputs the original video data to the sub-screen video output section 10. Concurrently, the audio decoding section 6 decodes an audio stream to original audio data to be outputted to the audio output section 7 (step S31).

Next, the sub-screen video output section 10 displays on the sub-screen the original video data outputted at step S31. Concurrently, the audio output section 7 outputs the original audio data (step S32). The control section 13 proceeds to a process at which whether the broadcast reception process ends is determined (step S27). Since the process at step S27 is the same as that at step S6 described in the first embodiment with reference to FIG. 4, detailed descriptions will be omitted.

Next, operations performed in a case where it is determined at the above-mentioned step S23 that the mobile digital television 200 is not closed (NO at step S23) will be described. When a result of the determination performed at step S3 is that the mobile digital television 200 is not closed (i.e. , open), the control section 13 determined whether or not the video stream has been stored in the second temporary storage section 62 (step S24). Here, the reason why such determination is performed at step S24 will be described. In order to decode a video stream to original video data, in the specification of MPEG, I pictures are essential. In the broadcasting standards, the I pictures in the video stream contained in a transport stream are allocated at regular intervals. Therefore, immediately after a state in which the main body of the mobile digital television 200 is closed has shifted to a state in which the main body of the mobile digital television 200 is opened, at some timing, an I picture may not be contained a video stream received and video may not be displayed until the I picture is received. Therefore, immediately after the state in which the main body of the mobile digital television 200 is closed has shifted to the state in which the main body of the mobile digital television 200 is opened, by decoding an I picture stored in the second temporary storage section 62 while the main body of the mobile digital television 200 is closed, video is to be instantaneously displayed on the main screen.

As a result of the determination performed at stepS24, when the video streamhas been stored in the second temporary storage section 62 (YES at step S24), the video stream analysis section 12 stops outputting an I picture to the second temporary storage section 62 (step S28).

After performing the process at step S28, the video stream analysis section 12 outputs, to the video decoding section 8, an I picture stored in the second temporary storage section 62. Thereafter, the control section 13 clears contents in the second temporary storage section 62. Further, the control section 13 resumes supplying power to the first temporary storage section 61, which has been stopped at the above-mentioned step S30 (step S29) . Here, a situation where an I picture whose output time (air time) has already passed is deemed as invalid data and not outputted to the video decoding section 8 may be considered. In order to determine whether or not the output time has passed, for example, the time management information (PTS or DTS) for synchronous reproduction may be used. The time management information is written in PSI (Program Specific Information) which is one piece of information contained in the transport stream. The time management information is written also in each of a video stream and an audio stream. Therefore, a method or the like for determining whether or not the output time has passed, in which the time management information written in PSI is stored at the above-mentioned step S22 and is compared with the time management information written in the video streams, may be used. After finishing the process at step S29, the control section 13 proceeds to a decoding process at step S25.

On the other hand, as a result of the determination performed at step S24, when nothing has stored in the second temporary storage section 62 (NO step S24), the control section 13 stores in the first temporary storage section 61 the video stream separated at step S22. Further, the control section 13 outputs the video stream to the video decoding section 8. Thereafter, the control section 13 proceeds to the decoding process at step S25. Since operations performed at step S25 are the same as those at step S4 in the first embodiment described above with reference to FIG. 4, detailed descriptions will be omitted.

As described above, in the second embodiment, a plurality of the temporary storage sections having different storage capacities (power consumption) to be used for the video decoding processes are provided and are properly used in a case where the main body of the mobile digital television 200 is closed and a case where the main body of the mobile digital television 200 is open. In other words, when the main body is closed, the control section 13 stops supplying power to the first temporary storage section 61, and the second temporary storage section 62 in which less power is consumed is used for the decoding processes. Thus, power consumption required for the decoding processes when the main body is close can be reduced as compared with that required for the decoding processes when the main body is open.

### (Third Embodiment)

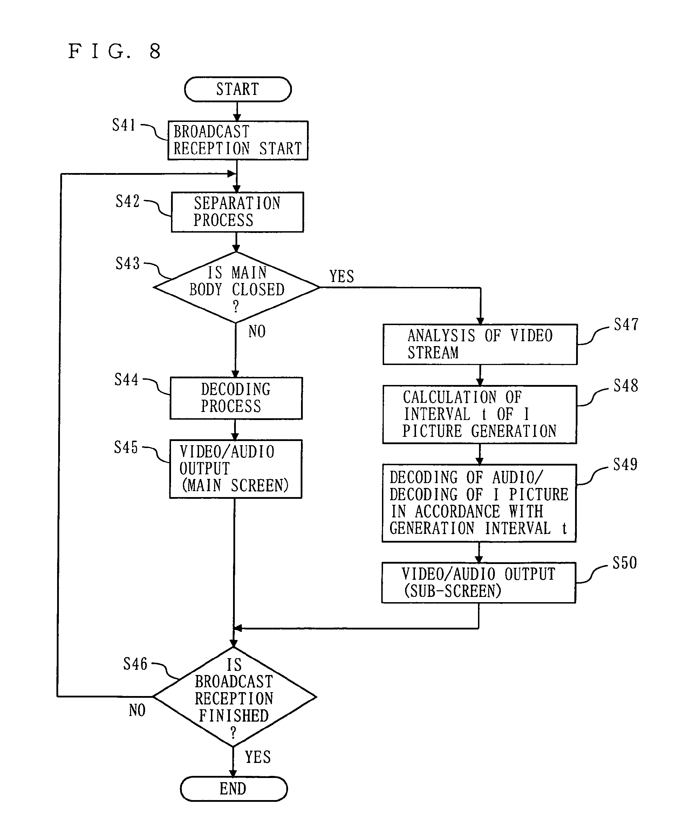

With reference to FIG. 8, a mobile digital television according to a third embodiment of the present invention will be described. In the first embodiment, the process of decoding an I picture at step S7 in FIG. 4 is performed at a constant speed. On the other hand, in the second embodiment, a processing speed of decoding an I picture is changed in accordance with a period of I picture generation. Note that since the mobile digital television according to the present embodiment is the same as that of the above-described first embodiment, the same reference numerical characters are used and detailed descriptions will be omitted.

FIG. 8 is a flowchart showing broadcast reception processes performed by the mobile digital television 100 according to the third embodiment. In FIG. 8, since processes at step S41 to step S46 are the same as those at step S1 to step S6 in the first embodiment described above with reference to FIG. 4, detailed descriptions will be omitted.

In FIG. 8, when a result of determination at step S43 is that the mobile digital television 100 is closed (YES at step S3), the control section 13 stores in the temporary storage section 11 a video stream separated at step S42. Next, the video stream analysis section 12 analyzes the video stream in the same manner as at step S7 in the first embodiment described above with reference to FIG. 4 (see FIG. 5), identifies an I picture or a P picture, and outputs the I picture to the video decoding section 8 (step S47). Next, the video stream analysis section 12 calculates a period t of generation of an I picture in a video stream (step S48). As the calculation method, the following methods may be used. For example, it is supposed that a GOP 51 shown in FIG. 5 contains video data read out for two seconds. If an I picture is allocated at the forefront of the GOP 51, an I picture is allocated at intervals of two seconds. In such a case, when the video stream analysis section 12 identifies the first I picture, the video stream analysis section 12 starts an internal timer (not shown), and when the video stream analysis section 12 identifies the next I picture, stops the internal timer. And the value indicated by the internal timer may be used as a period of generation of an I picture. Alternatively, a method in which a number of P pictures read out between when the first I picture is identified and when the next I picture is identified is counted and a period t of generation of an I picture is calculated by using the number of P pictures may be used.

Next, the audio decoding section 6 decodes an audio stream to original audio data to be outputted to the audio output section 7. Concurrently, the video decoding section 8 decodes the above-mentioned I picture to original video data to be outputted to the sub-screen video output section 10 (step S49). Here, the video decoding section 8 changes a speed of the process of decoding an I picture in accordance with the period t of generation of an I picture, which has been calculated at step S48. For example, it is supposed that it generally takes 0.1 second to decode one I picture. On the other hand, it is supposed that the period t of generation of an I picture is two seconds. In such a case, it may be considered that the control section 13, for example, drops a clock frequency of the video decoding section 8 (structured by a semiconductor element) to be 1/20. As a result, although it takes two seconds to decode one I picture, since the clock frequency is dropped, power consumed in the video decoding section 8 can be reduced. In addition, through adjusting the clock frequency so that the decoding process is finished within a period of generation of an I picture, the decoding process can be finished before obtaining the next I picture.

Next, the sub-screen video output section 10 displays the original video data outputted at step S49. Concurrently, the audio output section 7 outputs the original audio data (step S50) . After finishing the process at step S50, a determination process at step S46 is performed. Since an operation at step S46 is the same as that at step S6 in the first embodiment described above with reference to FIG. 4, detailed descriptions will be omitted.

As described above, in the third embodiment, through reducing the speed of the decoding process in accordance with the generation period of an I picture, power consumption required for the decoding process can be reduced, thereby resulting in further power saving.

### INDUSTRIAL APPLICABILITY

The mobile digital broadcast receiving apparatus and the digital broadcast receiving method allows video on air to be checked on the sub-screen even when the main screen is not in operation while reducing power consumption required for decoding the video. The present invention is useful in a flip-type mobile digital broadcast receiving apparatus, a digital broadcast receiving apparatus, having two or more screens, in which outputting video onto a main screen liquid crystal display can be turned on/off by a user's operation, and the like.

## Claims

1. A mobile digital broadcast receiving apparatus comprising:
a demodulating section for receiving digital broadcast and demodulating the digital broadcast to compressed multiplexed data of audio and video;
a transport decoding section for separating compressed audio data and compressed video data from the compressed multiplexed data;
a decoding section for decoding the compressed video data to original video data;
a first screen and a second screen for outputting the original video data; and
a switching section for switching an outputting mode between a first outputting mode in which the original video data is outputted onto the first screen and a second outputting mode in which the original video data is outputted onto the second screen, wherein
the decoding section decodes all of the compressed video data in the first outputting mode and only a part of the compressed video data in the second outputting mode.

2. The mobile digital broadcast receiving apparatus according to claim 1, having a main body which is structured so as to be foldable and further comprising an opening and closing detection section for detecting whether or not the main body is folded, wherein
the first screen is provided being positioned so as to be enclosed in the main body when the main body is folded,
the second screen is provided being positioned so as not to be enclosed in the main body even when the main body is folded, and
the switching section switches the outputting mode to the second outputting mode when the opening and closing detection section detects that the main body is folded and to the first outputting mode when the opening and closing detection section detects that the main body is not folded.

3. The mobile digital broadcast receiving apparatus according to claim 1, wherein in the second outputting mode, the decoding section decodes only a frame, extracted at intervals, among a plurality of successive frames of video data contained in the compressed video data.

4. The mobile digital broadcast receiving apparatus according to claim 1, wherein
the compressed video data is data compressed in an MPEG format, and
in the second outputting mode, the decoding section decodes only an I picture in the video data compressed in the MPEG format.

5. The mobile digital broadcast receiving apparatus according to claim 1, further comprising:
a first storage section for temporarily storing compressed video data to be decoded by the decoding section in the first outputting mode;
a second storage section, having a smaller storage capacity than a storage capacity of the first storage section, for temporarily storing compressed video data to be decoded by the decoding section in the second outputting mode; and
a video stream analysis section for sequentially storing, in the first storage section, all of the compressed video data in the first outputting mode and in the second storage section, only a part of the compressed data in the second outputting mode, wherein
in the second outputting mode, supplying power to the first storage section is stopped.

6. The mobile digital broadcast receiving apparatus according to claim 4, wherein
immediately after the switching section has switched the outputting mode from the second outputting mode to the first out putting mode, the decoding section reproduces the original video data to be outputted onto the first screen by using the compressed video data stored in the second storage section.

7. The mobile digital broadcast receiving apparatus according to claim 1, wherein an operating frequency of the decoding section in the second outputting mode is lower than in the first outputting mode.

8. The mobile digital broadcast receiving apparatus according to claim 6, wherein
the compressed data is data compressed in an MPEG format,
the mobile digital broadcast receiving apparatus further comprises an I picture interval detection section for detecting a minimum interval value among intervals of generation of an I picture contained in the compressed video data, and
the operating frequency of the decoding section in the second outputting mode changes in accordance with a result of detection performed by the I picture interval detection section.

9. A digital broadcast receiving method for receiving digital broadcast by using a mobile digital broadcast receiving apparatus having a first screen and a second screen, comprising:
a demodulating step of receiving digital broadcast and demodulating the digital broadcast to compressed multiplexed data of audio and video;
a transport decoding step of separating compressed audio data and compressed video data from the compressed multiplexed data;
a decoding step of decoding the compressed video data to original video data;
a first screen outputting step of outputting the original video data onto the first screen;
a second screen outputting step of outputting the original video data onto the second screen; and
a switching step of switching an outputting mode between a first outputting mode in which the original video data is outputted onto the first screen and a second outputting mode in which the original video data is outputted onto the second screen, wherein
the decoding step decodes all of the compressed video data in the first outputting mode and only a part of the compressed video data in the second outputting mode.

10. The digital broadcast receiving method according to claim 9, wherein
the mobile digital broadcast receiving apparatus has the main body which is structured so as to be foldable, and has the first screen provided being positioned so as to be enclosed in the main body when the main body is folded and the second screen provided being positioned so as not to be enclosed in the main body even when the main body is folded, the digital broadcast receiving method further comprising
an opening and closing detection step of detecting whether or not the main body is folded, wherein
the switching step switches the outputting mode to the second outputting mode when the opening and closing detection step detects that the main body is folded and to the first outputting mode when the opening and closing detection step detects that the main body is not folded.

11. The digital broadcast receiving method according to claim 9, wherein in the second outputting mode, the decoding step decodes only a frame, extracted at intervals, among the plurality of successive frames of video data contained in the compressed video data.

12. The digital broadcast receiving method according to claim 9, wherein
the compressed video data is data compressed in an MPEG format, and
in the second outputting mode, the decoding section decodes only an I picture in the video data compressed in the MPEG format.

13. The digital broadcast receiving method according to claim 9, wherein
the mobile digital broadcast receiving apparatus further comprises:
a first storage section for temporarily storing compressed video data to be decoded by the decoding step in the first outputting mode; and
a second storage section, having a smaller storage capacity than a storage capacity of the first storage section, for temporarily storing compressed video data to be decoded by the decoding step in the second outputting mode, the digital broadcast receiving method comprising
a video stream analysis step of sequentially storing, in the first storage section, all of the compressed video data in the first outputting mode and in the second storage section, only a part of the compressed data in the second outputting mode, wherein
in the second outputting mode, supplying power to the first storage section is stopped.

14. The digital broadcast receiving method according to claim 9, wherein
immediately after the switching step has switched the outputting mode from the second outputting mode to the first outputting mode, the decoding step reproduces the original video data to be outputted onto the first screen by using the compressed video data stored in the second storage section.

15. The digital broadcast receiving method according to claim 9, wherein a processing speed of the decoding step in the second outputting mode is lower than in the first outputting mode.

16. The digital broadcast receiving method according to claim 9, wherein
the compressed data is data compressed in an MPEG format, the mobile digital broadcast receiving apparatus further comprising
an I picture interval detection step of detecting a minimum interval value among intervals of generation of an I picture contained in the compressed video data, wherein
the processing speed of the decoding step in the second outputting mode changes in accordance with a result of detection performed at the I picture interval detection step.

## Amended claims

### Amended claims under Art. 19.1 PCT

**5.** The mobile digital broadcast receiving apparatus according to claim 1, further comprising:
a first storage section for temporarily storing compressed video data to be decoded by the decoding section in the first outputting mode;
a second storage section, having a smaller storage capacity than a storage capacity of the first storage section, for temporarily storing compressed video data to be decoded by the decoding section in the second outputting mode; and
a video stream analysis section for sequentially storing, in the first storage section, all of the compressed video data in the first outputting mode and in the second storage section, only a part of the compressed video data in the second outputting mode, wherein
in the second outputting mode, supplying power to the first storage section is stopped.

**6.** Amended) The mobile digital broadcast receiving apparatus according to claim 5, wherein
immediately after the switching section has switched the outputting mode from the second outputting mode to the first outputting mode, the decoding section reproduces the original video data to be outputted onto the first screen by using the compressed video data stored in the second storage section.

**7.** The mobile digital broadcast receiving apparatus according to claim 1, wherein an operating frequency of the decoding section in the second outputting mode is lower than in the first outputting mode.

**8.** The mobile digital broadcast receiving apparatus according to claim 6, wherein
the compressed data is data compressed in an MPEG format,
the mobile digital broadcast receiving apparatus further comprises an I picture interval detection section for detecting a minimum interval value among intervals of generation of an I picture contained in the compressed video data, and
the operating frequency of the decoding section in the second outputting mode changes in accordance with a result of detection performed by the I picture interval detection section.

**9.** A digital broadcast receiving method for receiving digital broadcast by using a mobile digital broadcast receiving apparatus having a first screen and a second screen, comprising:
a demodulating step of receiving digital broadcast and demodulating the digital broadcast to compressed multiplexed data of audio and video;
a transport decoding step of separating compressed

**13.** The digital broadcast receiving method according to claim 9, wherein
the mobile digital broadcast receiving apparatus further comprises:
a first storage section for temporarily storing compressed video data to be decoded by the decoding step in the first outputting mode; and
a second storage section, having a smaller storage capacity than a storage capacity of the first storage section, for temporarily storing compressed video data to be decoded by the decoding step in the second outputting mode, the digital broadcast receiving method comprising
a video stream analysis step of sequentially storing, in the first storage section, all of the compressed video data in the first outputting mode and in the second storage section, only a part of the compressed data in the second outputting mode, wherein
in the second outputting mode, supplying power to the first storage section is stopped.

**14.** Amended) The digital broadcast receiving method according to claim 13, wherein
immediately after the switching step has switched the outputting mode from the second outputting mode to the first outputting mode, the decoding step reproduces the original video data to be outputted onto the first screen by using the compressed video data stored in the second storage section.

**15.** The digital broadcast receiving method according to claim 9, wherein a processing speed of the decoding step in the second outputting mode is lower than in the first outputting mode.

**16.** The digital broadcast receiving method according to claim 9, wherein
the compressed data is data compressed in an MPEG format, the mobile digital broadcast receiving apparatus further comprising
an I picture interval detection step of detecting a minimum interval value among intervals of generation of an I picture contained in the compressed video data, wherein
the processing speed of the decoding step in the second outputting mode changes in accordance with a result of detection performed at the I picture interval detection step.
